# EUROPEAN PATENT APPLICATION

(11) **EP 2 471 853 A1**
(43) Date of publication of application: **04.07.2012**
(21) Application number: 11010184.7
(22) Date of filing: 23.12.2011
(51) Int. Cl.: C08K 3/00

(54) **Filler composition for polymer processing processes**

(30) Priority: 30.12.2010 IT AN20100220
(71) Applicant: Corinaldesi, Stefano, 60030 Morro d'Alba (AN) (IT)
(72) Inventor: Corinaldesi, Stefano, 60030 Morro d'Alba (AN) (IT)
(74) Representative: Montebelli, Marco

(57) **Abstract**

A thermoplastic polymer processing process comprises a step of adding to the polymer a filler composition comprising a mineral mixture including amorphous aluminium silicate (A) and magnesium hydroxide (B), both in the powdered state, and present in the mixture in a weight ratio such that the step of adding the filler is designed to reduce the polymer flow viscosity in the melted state and to reduce the polymer processing temperature relative to its characteristic and predetermined limit temperature.

## Description

This invention relates to thermoplastic polymer processing processes and in particular relates to a filler composition to be added to the thermoplastic polymers during the processing process.

During processing of the above-mentioned polymers, to produce plastic articles and products, all of the technologies currently used share the goal of seeking the best conditions for a compromise between two opposite requirements, namely achieving maximum homogeneity of the materials in the melted state and, at the same time, maximum process productivity. Indeed, the homogeneity of the materials in the melted state has an important role for the quality of material performance in terms of chemical, mechanical, thermal, electrical and physical properties and, consequently, the homogeneity also affects the quality of articles and products made using the above-mentioned materials.

In contrast, process productivity is related to attempts to reduce production costs, mainly by reducing the cycle times. However, the reduction of cycle times goes against the conditions needed to obtain good quality thermoplastics and products made using them.

In fact, as has been amply demonstrated by the use of injection moulding, blow moulding and extrusion processes, it is quite difficult to reduce the cycle time below a certain limit without simultaneously also changing the process parameters which govern cooling of the melted material in the moulds and/or dies and which regulate the consequent solidification and/or crystallisation of the polymeric thermoplastic materials.

Incorrect or irregular crystallisation causes a decline in the chemical, mechanical, thermal and electrical performance of the material and also causes the production of deformations and defects in the end product, which often compromise its appearance and/or functionality in an intolerable way. The prior art already includes various processes comprising the addition to polymers of additives in the form of fillers intended for the most diverse purposes.

Amongst the prior art, document US2006/167139, describes a process which uses a composition of magnesium and aluminium silicate to prevent the agglomeration of particles of a nanocomposite compound so as to give electrical insulation properties to a polymeric material.

Another document, EP1568733, describes the use of a magnesium and aluminium silicate - based compound which is added to plastic and thermosetting materials to give them hydrophobic properties, intended to make the polymeric material dielectric, with properties similar to those of glass and/or ceramics.

Document US 6492453 describes the use of a compound to make the sheath of an electric cable halogen-free.

Document WO 99/20685 refers to various types of polymer-based compounds which are part of the family of vinyls, polyethylenes and polypropylenes containing polyaniline and other similar electrically conductive materials. The compound is formulated in a mixture of additives selected from talcs, silica, magnesium, used as fillers.

Prior art substances marketed as fillers for adding to thermoplastic materials, given the results indicated above, have not proved very effective in obtaining a high level of productivity along with simultaneously high quality of the thermoplastic materials and of the products made from them. Consequently, high quality products require high process costs, whilst low cost products are low quality.

The main aim of this invention is therefore to overcome the above-mentioned disadvantages by allowing - for all amorphous, crystalline and/or semi-crystalline polymeric thermoplastic material processing processes, and compared with the prior art - an increase in productivity for high quality products; without compromising the chemical, physical and thermal properties of the original materials, and without compromising the appearance and functionality of the products made from them.

Within the scope of that, one aim of the invention is to allow the processing of any type of thermoplastic polymer at melting temperatures which are significantly lower than those currently used in the corresponding injection moulding, blow moulding and extrusion processes.

Another aim of the invention is to obtain, in the above-mentioned thermoplastic materials, and during the cooling or crystallisation step in the moulds or dies, an increase in the thickness of the "cold skin" which, all other conditions being equal, can reduce the extent of deformations and defects caused by material shrinkage during cooling.

Another aim is to allow a reduction in the percentage of colour "master" needed for colouring polymer materials.

Yet another aim is to reduce the percentage of other "master" additives used, for example to make the polymers fire-resistant, without thereby compromising their self-extinguishing degree in any way.

A further aim is to allow the amalgamation of thermoplastic materials which are heterogeneous, and/or contain foreign materials, such as cellulose, paper or other different materials, provided that they are not metallic.

Another aim is to extend the choice of types of polymers which can be used to make bacteriologically sterile products, or products which conduct electricity.

A further aim of the invention is to achieve said results by the handling and use in thermoplastic polymer and material processing processes of non-toxic products, which are food-safe, and easy and safe to use.

According to the invention, said purposes and aims are achieved by a mineral filler formulated as defined in claim 1, and/or in any of the other claims.

The technical features of the invention, in accordance with the aforementioned aims, are clearly indicated in the claims herein and the advantages of the invention are more apparent in the detailed description which follows, with reference to the accompanying drawings, which illustrate a preferred embodiment by way of example only and without limiting the scope of the invention, in which:
- Figure 1 is a first schematic diagram explaining the formula of the filler according to the invention;
- Figure 2 is a second schematic diagram explaining a further formula of the filler according to the invention;
- Figures 3 and 4 are comparative cross-sections of products obtained in identical process conditions, except for the use in the product in Figure 4 of a filler composition according to the invention;

- Figures 5 to 8 show, for a first commercial polymeric material, in graph and table form, the trend of several physical - chemical properties with related applications of interest for material processing processes;
- Figures 9 to 12 show, for a second commercial polymeric material, in graph and table form, the trend of several physical - chemical properties with related applications of interest for material processing processes;
- Figures 13 to 16 show, for a third commercial polymeric material, in graph and table form, the trend of several physical - chemical properties with related applications of interest for material processing processes;
- Figures 17 to 19 show, for a fourth commercial polymeric material, in graph and table form, the trend of several physical - chemical properties with related applications of interest for material processing processes;
- Figures 20 to 22 show, for a fourth commercial polymeric material, in graph and table form, the trend of several physical - chemical properties with related applications of interest for material processing processes;
- Figures 23 to 25 show, for a fifth commercial polymeric material, in graph and table form, the trend of several physical - chemical properties with related applications of interest for material processing processes;
- Figure 26 gathers in a single summary table, and for the five polymeric materials in the previous Figures 5 to 25, the results relating to several significant parameters in a comparison of those which can be obtained with the prior art and those which can be obtained with the technique according to this invention.

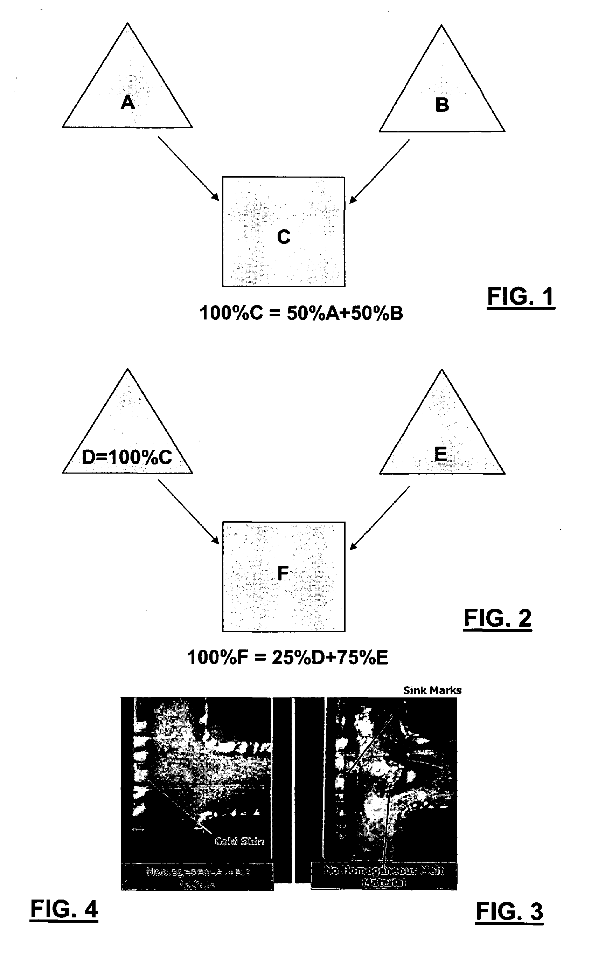

With reference to the accompanying drawings, Figure 1 illustrates a block diagram relating to the forming of a filler composition for thermoplastic polymer processing processes.

The filler composition basically comprises a mineral mixture C consisting of a first component represented by amorphous aluminium silicate, labelled A, and a second component, labelled B, represented by magnesium hydroxide. The components A and B of the mixture are both in the powdered state. The size of their particles is between 3 and 100 microns. A particle size between 5 and 50 microns is considered preferable.

The powdery components A and B contribute to forming the mixture, each being in a percentage ratio of between 40% and 50% of the total weight of the mixture. Preferably, the amorphous aluminium silicate (component A) and the magnesium hydroxide (component B) are present, each representing 50% of the total weight of the filler composition.

The latter weight quantification has proved particularly effective for achieving most of the advantages of this invention, which are described in more detail below.

The filler composition may be used as it is in thermoplastic material processing processes. However, according to another form of use, the composition may also comprise (as shown in Figure 2) a ground - crushed polymeric-base carrier agent, which makes the filler composition easier to use, above all in injection moulding, blow moulding and/or extrusion processes.

Figure 2 shows how a component D - representing 100% of the filler composition - is combined with the carrier agent, labelled E, to form a final filler composition, labelled F.

The weight quantity of the components in the mixture F is preferably obtained by combining 25% by weight of the component D and 75% by weight of the component E. In that way, the carrier agent E transports the mineral mixture D in the optimum weight ratio of 50% of the respective components A and B.

The carrier E may be obtained in various ways. It may be a polyolefin resin, for example having a base of polyethylene, polypropylene, or their combinations and/or mixtures. Alternatively, the carrier E may have a polymeric base, formed by a mixture of ethylene-vinyl-acetate resin and polyethylene; or a mixture of wax, or even a mixture of ethylene-vinyl-acetate resins.

Another possibility for the choice of most suitable carrier may be supplied by the same thermoplastic material for which the filler composition is intended. In fact, the carrier E may be made of the same type of thermoplastic material that will receive the filler composition as an additive for its processing process.

The filler composition according to the invention has demonstrated a surprising ability to create a thixotropic effect in the melted polymer when it is in the plasticising equipment of the plants for processing the thermoplastic polymers and materials.

That thixotropic effect, reducing mechanical resistance between the melted polymer and the mechanical parts of the conventional plasticising equipment (plasticising screw and walls of the plasticising cylinder) allows the production of a polymer which is perfectly melted at process temperatures which are around 30/40 °C lower than the standard temperatures.

Having available a polymer which is perfectly melted at temperatures which are 30/40 °C lower allows significant advantages to be obtained for all of the various types of processing processes for thermoplastic materials and polymers.

In fact, if for example we consider the injection moulding technique, and/or the blow moulding technique for forming plastic products, it is immediately clear that if the polymer arrives in the forming cavity at a lower temperature, then polymer crystallisation and solidification occur more quickly and, therefore, in more rapid processing cycles.

Experimentation of the filler composition conducted for injection moulding various types of materials indicated considerable reductions in cycle times, that is to say, significant increases in production compared with the prior art. Some test results - merely indicative and not limiting - showed for example that with HDPE production increases of around 25% are possible compared with the same material processed in standard conditions.

With ABS material a production increase of approximately 40% was seen. A material consisting of 50% homopolymer polypropylene and 50% copolymer polypropylene, with the addition of the filler composition according to the invention, showed a production increase in processing processes of around 20%, all other conditions being equal. The increase in production which can be obtained with the material PA6 with 15% glass fibre, once the filler composition according to the invention has been added, is 40%. Production increases of around 30% can be achieved: for PA66; for polypropylene with 40% calcium carbonate; and for polystyrene. PBT with 10% glass fibre is susceptible to production increases of around 60%.

Even the extrusion process draws significant benefits from the availability of a polymer which is perfectly melted at a lower temperature than the conventional one. In fact, it is possible to increase the speed of rotation of the plasticising screw, and therefore cycle productivity, with a greater safety margin relative to the limit on the speed of rotation at which overheating and thermal deterioration of the polymer would occur.

Another advantage of the process directly obtainable from the thixotropic effect produced by the composition according to the invention is the possibility of using compounds of materials which are heterogeneous, and even chemically incompatible. It is possible to amalgamate for example: PVC with PE, PET with PS, PET with PP, PET with ABS, PET with PA, PS with PE, PS with PP etc., these materials being supplied either in the pure state or with the presence of foreign materials such as paper, materials containing cellulose in various percentages, and/or even containing heterogeneous and non-thermoplastic products, provided that they are not metallic.

A further advantage, which may be derived from the fact that polymers may be processed at temperatures which are 30/40 °C lower than the standard temperature of conventional processes, is the possibility of using bactericidal additives even in those families of polymers that otherwise could not be sterilised.

In fact, since it is known that bactericidal additives have a thermal resistance threshold not greater than 240/260°C, all of those materials which currently require process temperatures higher than those tolerated by the bactericidal agents (for example Triclosan or Piriton Zinc, or even PHMB, polyhexamethylene biguanide hydrochloride) cannot be sterilised.

The thixotropic effect caused by the filler composition according to the invention allows the process temperatures to be lowered and therefore extension of the use of bactericidal additives even to those thermoplastic materials for which that application is currently prevented due to the melting temperatures reached by conventional processes.

Similar considerations also apply for certain additives currently used to make polymers conductive.

A well-known additive of that type is polyaniline (and or similar materials) which, however, unfortunately has a maximum thermal stability temperature of around 230 °C. Said limit does not allow thermoplastic materials processed at higher temperatures to be made electrically conductive. Use of the composition according to the invention allows the process temperature to be kept below the limit temperature tolerated by the polyaniline and similar materials even for those materials [for example ABS, PS, POM, etc.] which are not currently susceptible of becoming electrical conductors due to the higher process temperatures reached by conventional processing methods.

A further advantage of the invention relates to the problem of the fluidity of polypropylene. It is known that organic peroxides have the property of reacting with the polypropylene molecule, splitting it into polymeric chains. In that way the molecular weight is reduced and, as a result, the fluidity is increased. Reducing the viscosity generates an increase in the "Melt Flow Index" value, making the product more extrudable and spinnable. However, peroxides cross-link at 180°C, therefore - within the prior art - said peroxides can only be successfully used as additives for polymers which have a process temperature lower than the cross-linking temperature of the peroxides.

Adding the filler composition according to the invention to the polymers, lowering the process temperature by 30/40 °C, allows the use of such peroxides even in polymers which currently cannot be rendered more fluid in that way.

As regards the products, the invention allows the advantage of promoting homogenisation of the various mixtures of polymers in such a way as to obtain thicknesses which are free of unwanted inner cavities, with reduced surface shrinkage and a thicker cold skin. Figures 3 and 4 when compared with each other clearly show this aspect by a comparison of the object in Figure 3 obtained using a conventional process and the object in Figure 4, instead obtained using the filler composition according to the invention. Another, no less important, advantage of the invention is that it allows thermoplastic material processing processes that are more economical, since they have reduced energy requirements, linked to the lower process temperatures.

The last, but not least important, advantage of the invention resulting from lowering the process temperatures, is also that of reducing the thermal stress and wear on the mechanical structure of the presses. That result, significant in itself in general, is even more important in presses used for the injection of small-sized items which, having very limited masses (of around 100/200 kg), are particularly sensitive to thermal stress and wear.

To allow a better understanding of the features of this invention, several examples are provided of commercial polymers to which a composition containing the mixture according to the invention can be added.

### Example 1

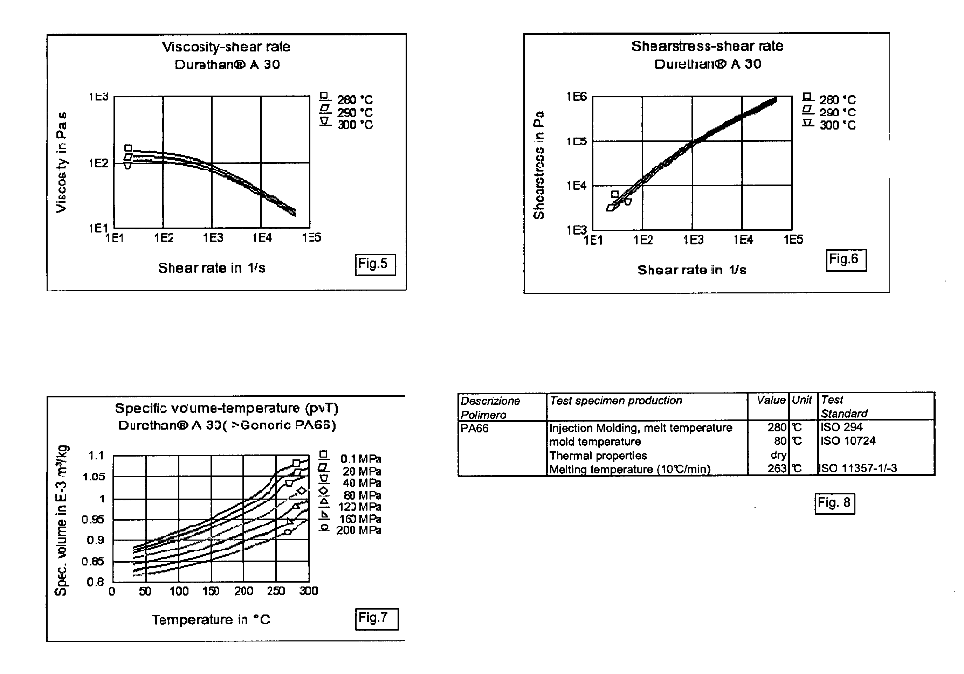

Referring to the unreinforced commercial polymer for injection moulding identified with the brand name: Durethan® A 30 | PA66 | LANXESS Deutschland GmbH and having the characteristics indicated in the diagrams in Figures 5 to 8, adding to that polymer the filler composition according to the invention, to the extent of 2% by weight changes the standard process temperature range (280-265 °C) to the lower range (265-240°C).

### Example 2

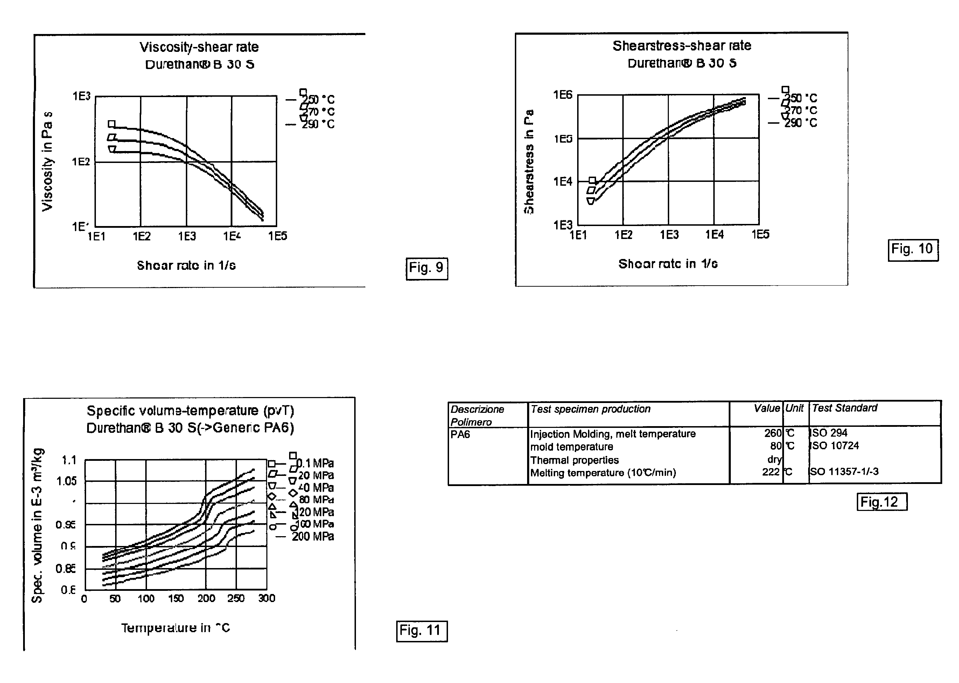

Referring to the unreinforced commercial polymer for injection moulding identified with the brand name Durethan® B 30 S | PA6 | LANXESS Deutschland GmbH and having the characteristics indicated in the diagrams in Figures 9 to 12, adding to that polymer the filler composition according to the invention, to the extent of 2% by weight changes the standard process temperature range (250-200 °C) to the lower range (205-180°C).

### Example 3

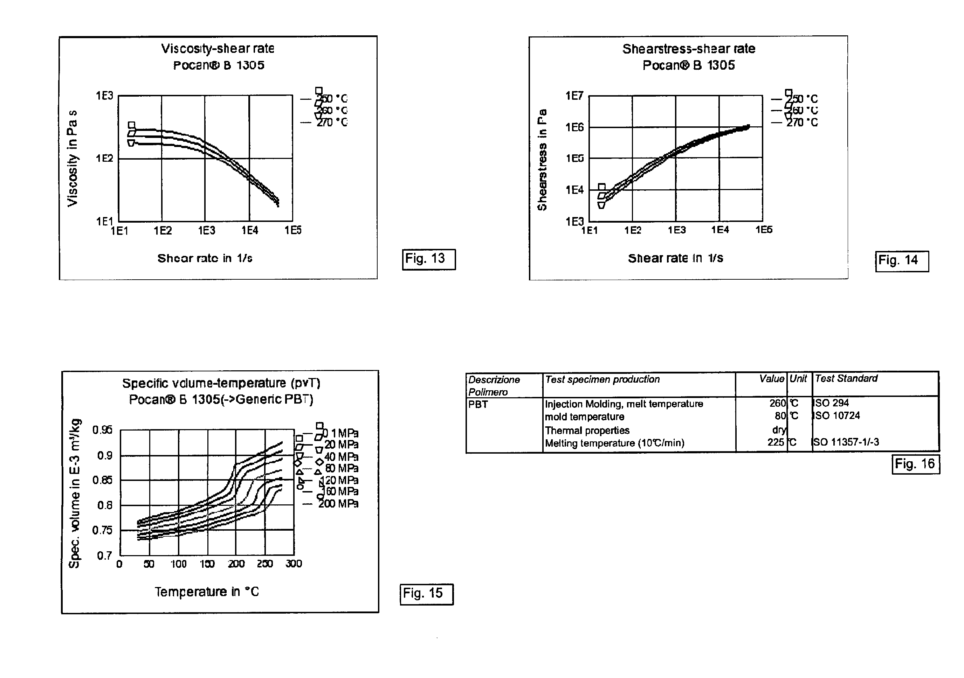

Referring to the unreinforced commercial polymer for injection moulding identified with the brand name Pocan® B 1305 | PBT | LANXESS Deutschland GmbH and having the characteristics indicated in the diagrams in Figures 13 to 16, adding to that polymer the filler composition according to the invention, to the extent of 2% by weight changes the standard process temperature range (255-220 °C) to the lower range (235-230°C).

### Example 4

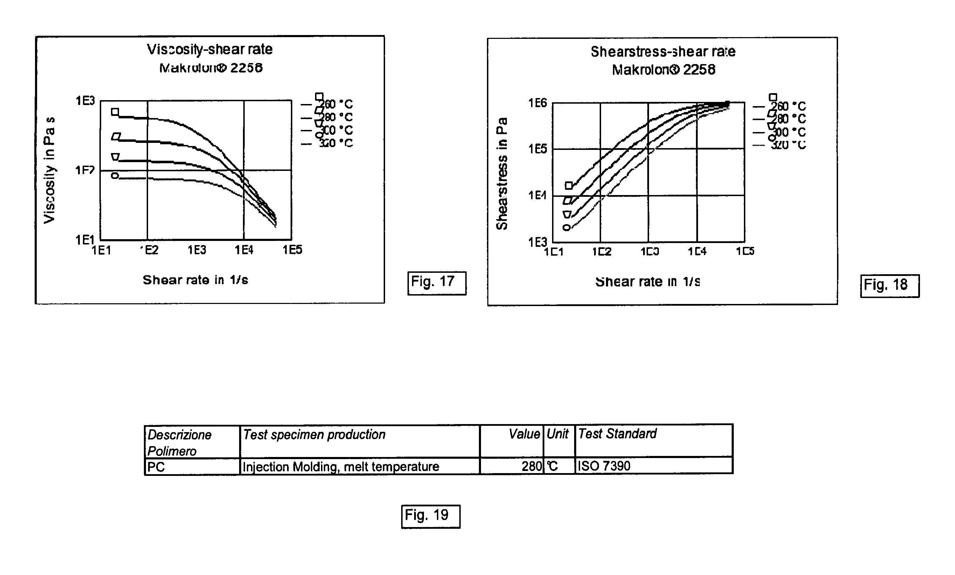

Referring to the unreinforced commercial polymer for injection moulding identified with the brand name Makrolon® 2258 | PC | Bayer Material Science and having the characteristics indicated in the diagrams in Figures 17 to 19, adding to that polymer the filler composition according to the invention, to the extent of 2% by weight changes the standard process temperature range (310-180 °C) to the lower range (260-240°C).

### Example 5

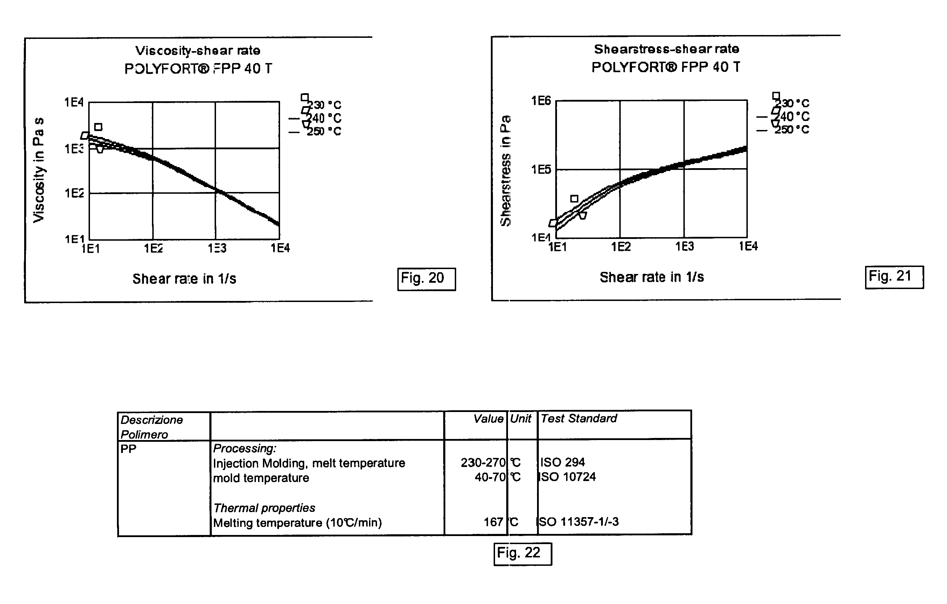

Referring to the commercial polymer POLYFORT® FPP 40 T | PP-T40 | A. Schulman GmbH, to which a homopolymer filled with 40% talc is added, having the characteristics indicated in the diagrams in Figures 20 to 22, adding to that polymer the filler composition according to the invention, to the extent of 2% by weight changes the standard process temperature range (230-180 °C) to the lower range (180-165°C).

### Example 6

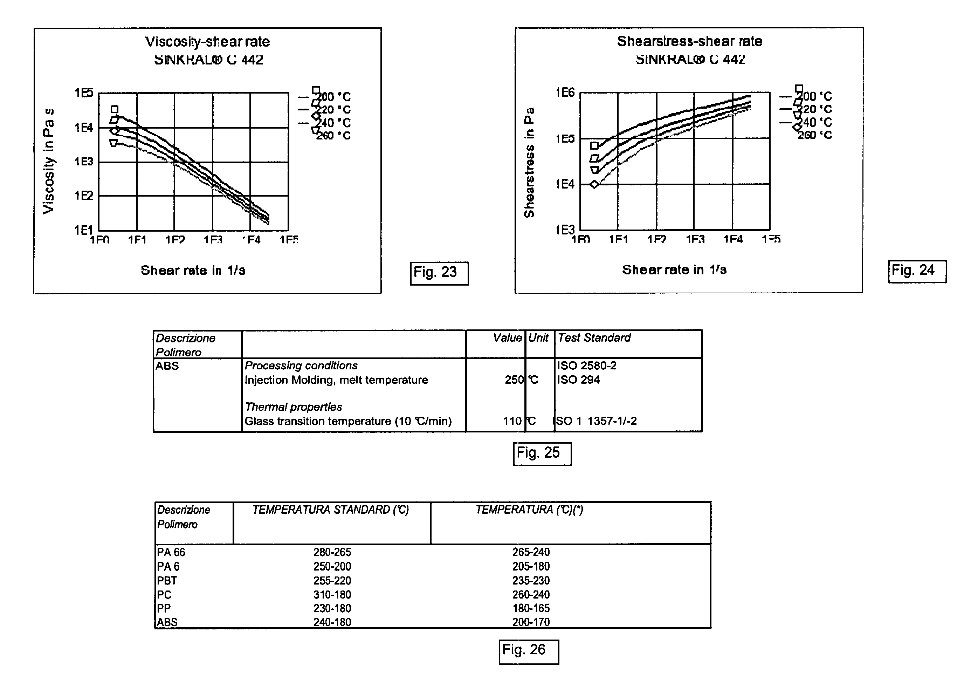

Referring to the commercial polymer SINKRAL® C 442 | ABS | Polimeri Europa, having the characteristics indicated in the diagrams in Figures 23 to 25, adding to that polymer the filler composition according to the invention, to the extent of 2% by weight changes the standard process temperature range (240-180 °C) to the lower range (200-170°C).

Figure 26 shows the results of the above examples, gathered in a summary table. An examination of the data in said table shows how the processing temperatures for the polymeric material with the additive according to this invention (Temperature *) are constantly lower than the standard characteristic temperatures, specific to the individual materials, when they are processed using the prior art processing processes.

## Claims

1. A thermoplastic polymer processing process, **characterised in that** it comprises a step of adding to the polymer a filler composition comprising a mineral mixture including amorphous aluminium silicate (A) and magnesium hydroxide (B), both in the powdered state, and each present in the mixture with a weight ratio of between 40% and 50% of the total weight of the mixture, the step of adding the filler being designed to reduce the polymer flow viscosity in the melted state and to reduce the polymer processing temperature relative to its characteristic and predetermined standard processing temperature.

2. The process according to claim 1, **characterised in that** the filler composition comprises a polymeric-base carrier agent in ground - crushed form.

3. The process according to claim 2, **characterised in that** the carrier agent is present in a weight ratio substantially equal to 75% of the total weight of the mixture, the remaining 25% of the total weight being accounted for by the mineral mixture.

4. The process according to claim 2, **characterised in that** the carrier agent includes a polyolefin resin mixture including polyethylene or polypropylene either individually or combined with each other.

5. The process according to claim 2, **characterised in that** the carrier agent includes a mixture of ethylene-vinyl-acetate resin and polyethylene.

6. The process according to claim 2, **characterised in that** the carrier agent includes a wax mixture.

7. The process according to claim 2, **characterised in that** the carrier agent includes a mixture of ethylene-vinyl-acetate resin.

8. The process according to claim 2, **characterised in that** the carrier agent includes a polymer from the same family as the thermoplastics to which the filler composition will be added.

9. The process according to claim 1, **characterised in that** the mineral mixture comprises powders whose particle sizes are between 3 and 100 microns.

10. The process according to claim 9, **characterised in that** the particle sizes of the powders are preferably between 5 and 20 microns.

11. The process according to any of the foregoing claims, **characterised in that** the step of adding additives comprises adding at least one antibacterial agent to thermoplastic polymers.

12. The process according to any of the foregoing claims, **characterised in that** the step of adding additives comprises adding at least one conductive agent to thermoplastic polymers.

13. The process according to any of the foregoing claims, **characterised in that** the step of adding additives comprises adding at least one fluidizing agent to thermoplastic polymers.
